# EUROPÄISCHE PATENTSCHRIFT

(11) **EP 0 641 957 B1**
(45) Veröffentlichungstag und Bekanntmachung des Hinweises auf die Patenterteilung: **26.11.1997**
(21) Anmeldenummer: 94112103.0
(22) Anmeldetag: 03.08.1994
(51) Int. Cl.: F16H 55/14, B60N 2/02

(54) **Stirnradgetriebe, insbesondere für Stellantriebe von Sitzen in Kraftfahrzeugen**
Cylindrical gear unit for actuator drive of vehicle seat
Ensemble à engrenage cylindrique pour dispositif d'entraînement d'un siège de véhicule

(30) Priorität: 08.09.1993 DE 9313547 U
(43) Veröffentlichungstag der Anmeldung: 08.03.1995
(73) Patentinhaber: ROBERT BOSCH GMBH, 70442 Stuttgart (DE)
(72) Erfinder: Oberle, Hans-Jürgen, Dipl.-Ing. (FH), D-76437 Rastatt (DE); Reichmann, Siegfried, Dipl.-Ing. (FH), D-77866 Rheinau (DE)

(56) Entgegenhaltungen:
- EP-A- 0 469 715
- GB-A- 2 224 805
- PATENT ABSTRACTS OF JAPAN vol. 003 no. 154 (M-085) ,18.Dezember 1979 & JP-A-54 133263 (TOSHIBA MACH CO LTD) 16.Oktober 1979,

## Beschreibung

### Stand der Technik

Die Erfindung geht aus von einem Stirnradgetriebe nach der Gattung des Hauptanspruchs. Es ist schon ein Stirnradgetriebe bekannt, bei dem bei jeder Drehrichtungsumkehr unerwünschte Geräusche entstehen, wenn nach Durchlaufen des üblicherweise kaum vermeidbaren Zahnspiels die Zähne des treibenden Rades an den Zähnen des getriebenen Rades anschlagen.

In der GB-OS 22 24 805 wird hierzu vorgeschlagen, seitlich an den Zahnrädern eine elastische, am Umfang ein Zahnprofil aufweisende Scheibe anzubringen. Das Zahnprofil entspricht dem Zahnprofil des Zahnrads, überragt jedoch dessen Außenkontur. Im Betrieb auftretenden mechanischen Spannungen in der Scheibe können eine Kraftkomponente erzeugen, die ein Ablösen der Scheibe vom Zahnrad bewirken kann.

### Vorteile der Erfindung

Das erfindungsgemäße Stirnradgetriebe mit den kennzeichnenden Merkmalen des Hauptanspruchs hat den Vorteil, daß der Teilabschnitt mit dem vergrößerten Zahnprofil des einen Zahnrades stets unter Spannung in die Zahnlücke des anderen Zahnrades eintaucht, so daß bei Drehrichtungsumkehr zunächst diese Spannung überwunden werden muß, bevor eine Relativbewegung der Verzahnung des einen Zahnrades zur Verzahnung des anderen Zahnrades stattfinden kann. Diese Spannung sorgt für eine sanfte Anlage der Zähne einander, so daß die unerwünschten Geräusche vermieden sind. Durch die Aufnahme des nachgiebigen Zahnringes mit seinen nach innen vorspringenden Leisten in die Zahnlücken des konzentrischen Ansatzes ist ein Ablösen sicher vermieden.

Die Übertragung der Kraft erfolgt dann wie üblich durch die Verzahnungen aus dem relativ harten Material.

Durch die in den Unteransprüchen aufgeführten Maßnahmen sind vorteilhafte Weiterbildungen und Verbesserungen des im Hauptanspruch angegebenen Stirnradgetriebes möglich.

### Zeichnung

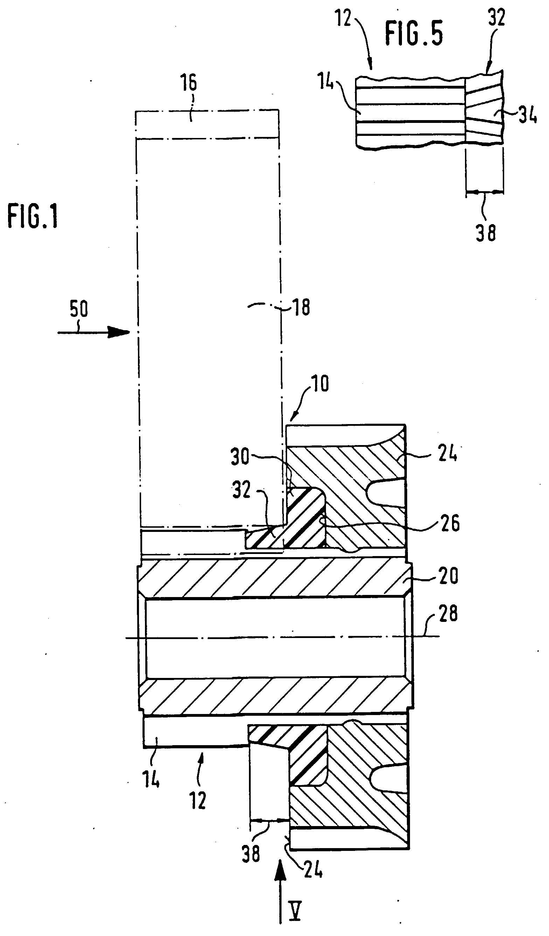

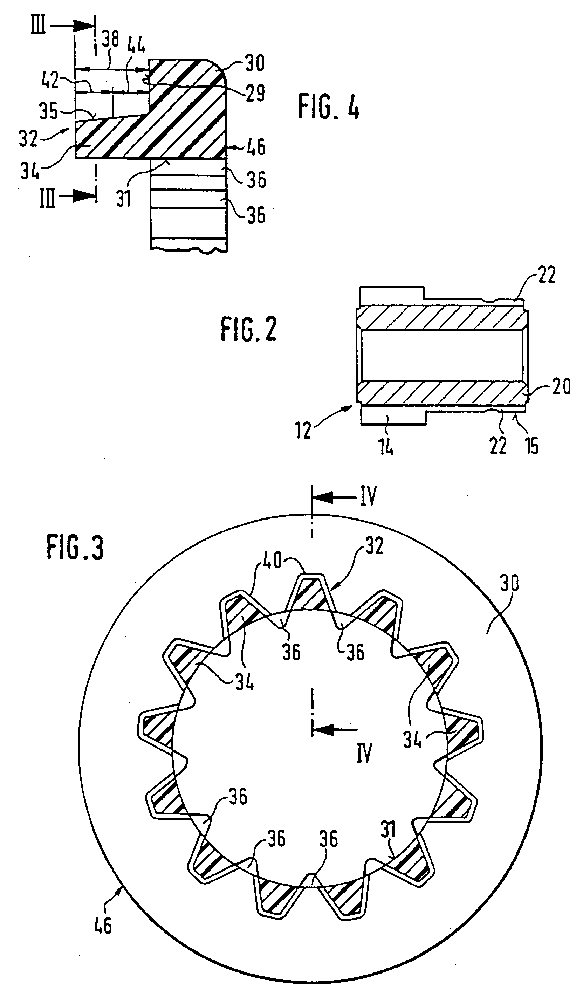

Ein Ausführungsbeispiel der Erfindung ist in der Zeichnung dargestellt und in der nachfolgenden Beschreibung näher erläutert. Es zeigen Figur 1 ein Stirnradgetriebe, bei dem das eine Zahnrad im Schnitt dargestellt ist, wobei dessen Verzahnung mit der Verzahnung eines anderen, strichpunktiert dargestellten Zahnrades kämmt und ein weiteres Zahnrad auf einem Ansatz des einen Zahnrades angeordnet ist, Figur 2 das eine Zahnrad im Längsschnitt, Figur 3 einen Schnitt entlang der Linie III-III in Figur 4, durch einen Ring aus nachgiebigem Material, gegenüber Figur 1 in vergrößertem Maßstab dargestellt, Figur 4 einen Teilschnitt durch den Ring gemäß Figur 3, entlang der Linie IV-IV und Figur 5 eine Teilansicht der Anordnung gemäß Figur 1 in Richtung des Pfeiles V gesehen.

### Beschreibung des Ausführungsbeispiels

Ein in Figur 1 dargestelltes Stirnradgetriebe 10 weist ein erstes Zahnrad 12 auf, dessen Verzahnung 14 mit der Verzahnung 16 eines anderen Zahnrades 18 kämmt. Die beiden Zahnräder 12 und 18 sind aus einem vergleichsweise harten Material, beispielsweise Stahl oder Sintermetall. Das eine Zahnrad 12 weist an seiner einen Stirnseite einen buchsenartigen Ansatz 20 auf, dessen Außendurchmesser größer ist als der Fußkreis der Verzahnung 14. Der Außendurchmesser des Ansatzes 20 ist jedoch kleiner als der Teilkreis der Verzahnung 14. Die Zahnlücken der Verzahnung 14 sind über die Mantelfläche 15 des Ansatzes 20 weitergeführt, so daß der Ansatz an seiner Mantelfläche 15 mit nutähnlichen Vertiefungen 22 versehen ist. Auf der Mantelfläche 15 des Ansatzes 20 sitzt ein weiteres Zahnrad 24, das ebenfalls zu dem Stirnradgetriebe 10 gehört. Es weist an seiner dem einen Zahnrad 12 zugewandten Stirnseite 24 eine Vertiefung oder Einsenkung 26 auf, die ringförmig ausgeführt und koaxial zur Drehachse 28 des einen Zahnrades 12 angeordnet ist. In dieser Vertiefung 26 sitzt eine auf diese abgestimmte, ringflanschartige Wand 30 eines Zahnrings 32, der an der einen Stirnfläche der ringflanschartigen Wand 30 angeordnet ist (Figuren 1 und 4). Die Verzahnung 34 des Zahnrings 32 entspricht im wesentlichen der Verzahnung 14 des einen Zahnrades 12. Der Innendurchmesser des Zahnrings 32 und der ringflanschartigen Wand 30 entsprechen dem Außendurchmesser des Ansatzes 20, der zum Zahnrad 14 gehört. An der inneren Mantelfläche 31 der ringflanschartigen Wand 30 sind eine Vielzahl von nach innen vorspringenden Leisten 36 angeordnet, welche bei montiertem Stirnradgetriebe (Figur 1) in die nutartigen Vertiefungen 22 der Zahnlücken der Verzahnung 14 des einen Zahnrades 12 greifen. Diese vorspringenden Leisten 36 dienen der Drehmitnahme zwischen dem einen Zahnrad 14 und dem weiteren Zahnrad 24. Die Verzahnung 34 des Zahnrings 32 gehört ihrem Wesen nach zu der Verzahnung 14 des einen Zahnrades 12, auch wenn sie, wie gerade beschrieben, mit dem weiteren Zahnrad 24 über die ringflanschartige Wand 30 verbunden ist. Der Zahnring 32 weist also einen Teil der Verzahnung des einen Zahnrades 12 auf, wobei das Zahnprofil des Zahnrings 32 an seiner der Verzahnung 14 des einen Zahnrades 12 zugewandten Seite kleiner und an seiner von der Verzahnung 14 des einen Zahnrades 12 abgewandten Seite größer ist als das Profil der Verzahnung 14 des einen Zahnrades 12. Wie insbesondere aus Figur 5 ersichtlich ist, ist die Verzahnung 34 des Zahnrings 32 konisch ausgebildet und sie erstreckt sich über eine Länge 38, welche der Breite des Zahnrings 32 entspricht. An ihrem von der flanschartigen Wand 30 abgewandten, freien Ende ist das Profil der Verzahnung 34 des Zahnrings 32 kleiner als das Profil der Verzahnung 14 des einen Zahnrades 12. An ihrem anderen, von dem einen Zahnrad 12 abgewandten Ende ist die Verzahnung 34 des Zahnrings 32 im Profil größer als das Profil der Verzahnung 14 des einen Zahnrades 12. Diese Profilvergrößerung beschränkt sich nicht nur auf die Zahnhöhe sondern auch auf die Zahnflanken, was durch die Linien 40 bei der Verzahnung 34 in Figur 3 deutlich wird. Aus Figur 4 ist ersichtlich, daß sich auch die Zahnhöhe 35 zur Wand 30 hin vergrößert. In einem ersten, den einem Zahnrad 12 zugewandten Bereich 42 ist das Zahnprofil also kleiner und in einem zweiten der Wand 30 zugewandten Bereich 44 ist das Zahnprofil der Verzahnung 34 also größer als das Zahnprofil der Verzahnung 14. Das heißt, daß beim Ausführungsbeispiel das Profil der Verzahnung 34 des Zahnrings 32 bei etwa halber Zahnlänge dem Profil der Verzahnung des einen Zahnrades 12 entspricht. Beim Ausführungsbeispiel ist der Zahnring 32 durch einen Kranz von in Achsrichtung aus der einen Stirnwand 29 der ringflanschartigen Wand 30 gebildet. Er bildet also zusammen mit diesem Ringflansch 30 ein einstückiges Bauelement 46.

Wenn also dieses Bauelement 46 mit seiner ringflanschartigen Wand 30 in der Vertiefung 26 des weiteren Zahnrades 24 sitzt, kann dieses so auf den Ansatz 20 des einen Zahnrades 12 aufgeschoben werden, daß die Leisten 36 in die nutartigen Vertiefungen 22 des Ansatzes 20 gelangen. Dadurch wird auch gleichzeitig der Zahnring 32 zur Verzahnung 14 des einen Zahnrades 12 positioniert, was von besonderer Bedeutung ist, da der Zahnring 32 seinem Wesen nach zur Verzahnung 14 des einen Zahnrades 12 gehört. Dadurch, daß der Abschnitt 42 des Zahnrings 32 ein kleineres Profil hat als die Verzahnung 14 des Zahnrades 12 ist ein einfaches Fügen der Verzahnungen 14 und 16 möglich.

Um die Verzahnung 16 des Zahnrades 18 in ihre in Figur 1 dargestellte Betriebstellung zu bringen, muß das Zahnrad 18 unter erhöhtem Druck in Richtung des Pfeiles 50 (Figur 1) positioniert werden. Dabei wird die Verzahnung 34 des Zahnrings 32 etwas deformiert, was durch deren Konizität ohne Schwierigkeiten möglich ist. Diese Verformung erfolgt auch stets dann, wenn während des Betriebes des Getriebes die Verzahnungen 14 und 16 miteinander kämmen. Durch die im Bereich 44 der Verzahnung 34 erfolgte Quetschung wird ein besonders ruhiger Lauf des Stirnradgetriebes erreicht, weil bei Drehrichtungsumkehr die dort vorhandene Spannung ein hartes Anschlagen der Zähne des treibenden Rades an den Zähnen des getriebenen Rades verhindert und für eine sanfte Anlage der einander zugewandten Zahnflanken sorgt. Die zu übertragende Kraft selbst wird durch die Verzahnungen 14 und 16 weitergeleitet.

Es ist somit erläutert worden, daß in Richtung der Drehachsen der Zahnräder 12, 18, 24 gesehen zumindest ein Abschnitt 38 der Verzahnung 14 des einen Zahnrades 12 aus einem nachgiebigen Material besteht und daß dieser Abschnitt 38 wenigstens über einen Teil 44 der Zahnlänge ein Zahnprofil aufweist, das größer ist als das diesem zugeordnete Profil der Zahnlücke des anderen Zahnrades 18.

## Patentansprüche

1. Geräuscharmes Stirnradgetriebe, insbesondere für Stellantriebe von Sitzen in Kraftfahrzeugen, mit zwei miteinander kämmenden Verzahnungen von zwei Stirnrädern (12, 18) aus einem vergleichsweise harten Material, wobei die Verzahnung (14) des einen Zahnrades (12) in Richtung der Drehachsen der Zahnräder gesehen zumindest einen Verzahnungsabschnitt (38) aufweist, der aus einem nachgiebigem Material besteht und der wenigstens über einen Teil (44) der Zahnlänge ein Zahnprofil aufweist, das größer ist als das diesem zugeordnete Profil der Zahnlücke des anderen Zahnrades (18), wobei das eine Zahnrad (12) an seiner einen Stirnfläche einen zu seiner Drehachse (28) konzentrischen Ansatz (20) mit einer Mantelfläche (15) aufweist, auf dem ein aus dem nachgiebigen Material bestehender Zahnring (32) angeordnet ist, der auf seiner Verzahnung (34) den Verzahnungsabschnitt (38) enthält,
dadurch gekennzeichnet,
- daß der konzentrische Ansatz (20) einen Durchmesser aufweist, der größer als der Fußkreis und kleiner als der Teilkreis der Verzahnung (14) des einen Zahnrades (12) ist, und
- daß der auf dem Ansatz (20) angeordnete Zahnring (32) nach innen vorspringende Leisten (36) aufweist, die in über die Mantelfläche (15) des Ansatzes (20) weitergeführte Zahnlücken der Verzahnung (14) des einen Zahnrades (12) greifen.

2. Geräuscharmes Stirnradgetriebe nach Anspruch 1,
dadurch gekennzeichnet,
daß das Profil der Verzahnung (34) des Zahnringes (32) an der der Verzahnung (14) des einen Zahnrades (12) zugewandten Seite kleiner und an der der Verzahnung (14) des einen Zahnrades (12) abgewandten Seite größer ist als das Profil der Verzahnung (14) des einen Zahnrades (12).

3. Geräuscharmes Stirnradgetriebe nach Anspruch 2,
dadurch gekennzeichnet,
daß das Profil der Verzahnung (34) des Zahnrings (32) konisch verläuft.

4. Geräuscharmes Stirnradgetriebe nach Anspruch 2 oder 3,
dadurch gekennzeichnet,
daß das Profil der Verzahnung (34) des Zahnrings (32) über deren Zahnlänge gesehen bei etwa halber Zahnlänge dem Profil der Verzahnung (14) des einen Zahnrades (12) entspricht.

5. Geräuscharmes Stirnradgetriebe nach einem der Ansprüche 1-4,
dadurch gekennzeichnet,
daß an dem dem einen Zahnrad (12) abgewandten Ende des Zahnrings (32) ein Ringflansch (30) angeordnet ist, welcher in einer auf diesen abgestimmten Vertiefung (26) eines weiteren Zahnrades (24) sitzt, das auf dem Ansatz (20) des einen Zahnrades (12) angeordnet ist.

## Claims

1. Low-noise cylindrical-gear mechanism, in particular for actuating drives of seats in motor vehicles, with two intermeshing tooth systems on two cylindrical gears (12, 18) composed of a comparatively hard material, the tooth system (14) on one gear (12) having, as seen in the direction of the axes of rotation of the gears, at least one section of toothing (38) which is composed of a flexible material and, at least over part (44) of the tooth length, has a tooth profile which is larger than the profile assigned to it of the tooth gap on the other gear (18), the first-mentioned gear (12) having on one end face an extension (20) which is concentric with its axis of rotation (28), which has a circumferential surface (15) and on which is arranged a toothed ring (32) which is composed of the flexible material and includes the section of toothing (38) on its tooth system (34), characterized
- in that the concentric extension (20) has a diameter which is greater than the root circle and less than the pitch circle of the tooth system (14) of the first-mentioned gear (12), and
- in that the toothed ring (32) arranged on the extension (20) has inward-projecting strips (36) which engage in tooth gaps in the tooth system (14) of the first-mentioned gear (12) which are extended beyond the circumferential surface (15) of the extension (20).

2. Low-noise cylindrical-gear mechanism according to Claim 1, characterized in that the profile of the tooth system (34) of the toothed ring (32) is smaller on the side facing the tooth system (14) of of the first mentioned gear (12) and larger on the side facing away from the tooth system (14) of the first-mentioned gear (12) than the profile of the tooth system (14) of the first-mentioned gear (12).

3. Low-noise cylindrical-gear mechanism according to Claim 2, characterized in that the profile of the tooth system (34) of the toothed ring (32) is conical.

4. Low-noise cylindrical-gear mechanism according to Claim 2 or 3, characterized in that the profile of the tooth system (34) of the toothed ring (32) corresponds at approximately half the length of the teeth, when viewed along the length of the teeth, to the profile of the tooth system (14) of the first-mentioned gear (12).

5. Low-noise cylindrical-gear mechanism according to one of Claims 1-4, characterized in that at that end of the toothed ring (32) which is remote from the first-mentioned gear (12) there is arranged an annular flange (30) which is seated in a depression (12), matched to it, in a further gear (24) which is arranged on the extension (20) of the first-mentioned gear (12).

## Revendications

1. Renvoi à engrenage droit, faisant peu de bruit, en particulier pour mécanismes de commande de sièges dans des véhicules à moteur, avec deux dentures qui engrènent l'une dans l'autre, de deux pignons droits (12, 18) réalisés en une matière relativement dure, la denture (14) de l'une des roues dentées, la roue dentée (12), vue dans le sens de l'axe de rotation des roues dentées, présentant au moins une section de denture (38) qui est réalisée en une matière flexible, et au moins sur une partie (44) de la longueur des dents présente un profil de dent qui est plus grand que le profil correspondant à celui-ci des entredents de l'autre roue dentée, la roue dentée (18), l'une des roues dentées, la roue dentée (12) présentant sur l'une de ses faces frontales un appendice (20) concentrique à son axe de rotation (28) avec une surface enveloppe (15), appendice sur lequel est disposé une couronne dentée (32) réalisée en la matière flexible et qui contient sur sa denture (34) la section de denture (38),
caractérisé en ce que
• l'appendice concentrique (20) présente un diamètre qui est plus grand que le cercle de pied et plus petit que le cercle primitif de référence de la denture (14) de l'une des roues dentées, la roue dentée 12) et
• la couronne dentée (32), disposée sur l'appendice (20), présente des nervures qui font saillie vers l'intérieur, et qui viennent en prise dans des entredents de la denture (14) de l'une des roues dentées, la roue dentée (12) qui sont prolongés sur la surface enveloppe (15) de l'appendice (20).

2. Renvoi à engrenage droit, faisant peu de bruit, selon la revendication 1,
caractérisé en ce que
le profil de la denture (34) de la couronne dentée (32) sur la face qui est tournée vers la denture (14) de l'une des roues dentées, la roue dentée (12) est plus petit et sur la face qui est située à l'opposé de la denture (14) de l'une des roues dentées, la roue dentée (12) est plus grand que le profil de la denture (14) de l'une des roues dentées, la roue dentée (12).

3. Renvoi à engrenage droit, faisant peu de bruit, selon la revendication 2,
caractérisé en ce que
le profil de la denture (34) de la couronne dentée (32) s'étend de façon conique.

4. Renvoi à engrenage droit, faisant peu de bruit, selon la revendication 2 ou 3,
caractérisé en ce que
le profil de la denture (34) de la couronne dentée (32), vu sur la longueur de sa dent, correspond sur environ la moitié de cette longueur de dent au profil de la denture (14) de l'une des roues dentées, la roue dentée (12).

5. Renvoi à engrenage droit, faisant peu de bruit, selon l'une des revendications 1 à 4,
caractérisé en ce qu'
à l'extrémité ,située à l'opposé de l'une des roues dentées, la roue dentée (12), on dispose un flasque annulaire (30) qui repose dans un renfoncement (26) correspondant à celui-ci, d'une autre roue dentée (24) qui est disposée sur l'appendice (20) de l'une des roues dentées, la roue dentée (12).
